# EUROPÄISCHE PATENTSCHRIFT

(11) **EP 1 843 887 B1**
(45) Veröffentlichungstag und Bekanntmachung des Hinweises auf die Patenterteilung: **20.04.2011**
(21) Anmeldenummer: 06700980.3
(22) Anmeldetag: 19.01.2006
(51) Int. Cl.: B29C 45/26, B29C 45/04

(54) **SPRITZGIESSMASCHINE MIT AUS EINER HALTERUNG ENTNEHMBAREM FORMEINSATZPAAR**
INJECTION MOLDING MACHINE WITH A PAIR OF MOLDING INSERTS THAT CAN BE REMOVED FROM A HOLDING DEVICE
MACHINE DE MOULAGE PAR INJECTION COMPRENANT UNE PAIRE DE PARTIES RAPPORTEES QUI PEUVENT ETRE RETIREES D'UN SUPPORT

(30) Priorität: 22.01.2005 DE 102005003074
(43) Veröffentlichungstag der Anmeldung: 17.10.2007
(73) Patentinhaber: Zahoransky GmbH Formen- und Werkzeugbau, 08237 Steinberg (DE)
(72) Erfinder: SCHNURR, Reinhard, 79244 Münstertal (DE)
(74) Vertreter: Maucher, Wolfgang
(86) Internationale Anmeldenummer: PCT/EP2006/000467
(87) Internationale Veröffentlichungsnummer: WO 2006/077127

(56) Entgegenhaltungen:
- WO-A-95/11792
- DE-A1- 3 623 566
- DE-A1- 3 821 312

## Beschreibung

Die Erfindung bezieht sich auf eine Spritzgießmaschine zum Spritzen von Spritzlingen mit einem Kern und einer aus Mantelmaterial bestehenden Hülle, mit einer Spritzstation und einem bei dieser in eine Halterung einsetzbaren Spritzgießwerkzeug, das ein Formeinsatzpaar aufweist, dessen Formeinsätze eine düsenseitige Formhälfte und eine schließseitige Formhälfte bilden, wobei mehrere Formeinsatzpaare vorgesehen sind, die Verriegelungsmittel zum Zusammenhalten der Formeinsatzpaare bei geöffneter Halterung aufweisen und in verriegelter Lage aus der Halterung entnehmbar sind, wobei sie wenigstens eine Ablage- und Kühlstation und wenigstens eine Entformstation aufweist und wobei eine Transportvorrichtung zum Transportieren der Formeinsatzpaare zwischen den Stationen mit wenigstens einer Spritzstation, wenigstens einer Ablage- und Kühlstationen und wenigstens einer Entformstation vorgesehen ist.

Solche bekannten Spritzgießmaschinen ermöglichen ein kostengünstiges Herstellen von voluminösen Spritzgießteilen wie zum Beispiel Schuhsohlen, Haushaltsbürsten und dergleichen, unter anderem, da für den geschäumten Kern kostengünstiges Material verwendet werden kann. Wegen des aufschäumenden Kerns kann mit vergleichsweise geringen Pressdrücken gearbeitet werden. Daraus ergibt sich die Möglichkeit, Formen aus Leichtmetall einzusetzen, wodurch deren Bearbeitung vereinfacht und kostengünstiger ist.
Jedoch ist für das Abkühlen der Spritzlinge eine vergleichsweise lange Abkühlzeit erforderlich, so dass dementsprechend die Zykluszeit verlängert ist und beispielsweise 120 Sekunden oder mehr betragen kann. Zu dieser langen Zykluszeit trägt auch der durch das Treibmittel im geschäumten Kern anhaltende Innendruck im Spritzling bei.

Es ist auch schon bekannt, die Spritzlinge nach einer Teil-Abkühlzeit auszuformen und in ein Wasserbad zu fördern. Jedoch ergibt sich hierbei zusätzlich zu dem Problem, dass die Spritzlinge in dem Wasserbad aufschwimmen können und damit eine ungleichmäßige Abkühlung erfahren, das weitere Problem, dass das im Spritzkern noch aktive Treibmittel häufig Aufbauchungen verursacht, die zu Ausschuss führen.

Zur besseren Ausnützung der langen Zykluszeit ist es bekannt, eine Karussellanordnung mit mehreren, zum Beispiel acht Schließeinheiten mit darin gehaltenen Formen vorzusehen. Durch Drehung der Karussellanordnung lassen sich die von den jeweiligen Schließeinheiten zusammengehaltenen Formen nacheinander einer am Umfang angeordneten Spritzeinheit zuordnen, um jeweils einen Spritzvorgang durchzuführen. Danach können die Formen geschlossen in den jeweiligen Schließeinheiten weitertransportiert werden, bis eine ausreichende Abkühlung der Spritzlinge erreicht ist. Die Anzahl der umlaufenden Formen jeweils mit Schließeinheit richtet sich nach der Abkühlzeit und dem für den jeweiligen Spritzvorgang notwendigen Zeitabschnitt. Insgesamt ist sowohl durch die erforderliche Anzahl von Formen mit Schließeinheiten als auch durch die Karussellanordnung zum Drehen der Form/Schließeinheiten ein hoher Aufwand vorhanden.

Aus der DE 38 21 312 A1 ist eine Spritzgießmaschine zum Spritzen von Spritzlingen mit einem Kern und einer aus Mantelmaterial bestehenden Hülle bekannt, die eine Spritzstation und einem bei dieser in eine Halterung einsetzbaren Spritzgießwerkzeug, das ein Formeinsatzpaar aufweist, dessen Formeinsätze eine düsenseitige Formhälfte und eine schließseitige Formhälfte bilden, aufweist. Dabei sind mehrere Formeinsatzpaare vorgesehen, die Verriegelungsmittel zum Zusammenhalten der Formeinsatzpaare bei geöffneter Halterung aufweisen und in verriegelter Lage aus der Halterung entnehmbar sind, wobei sie wenigstens eine Ablage- und Kühlstation und wenigstens eine Entformstation aufweist. Des Weiteren ist eine Transportvorrichtung zum Transportieren der Formeinsatzpaare zwischen den Stationen mit wenigstens einer Spritzstation, wenigstens einer Ablage- und Kühlstation und wenigstens einer Entformstation vorgesehen.
Mit einer solchen Maschine kann die Taktzeit reduziert werden, da diese nur die Einspritz- und Nachdruckphase umfassen muss.

Aufgabe der vorliegenden Erfindung ist es, eine Spritzgießmaschine der eingangs erwähnten Art zu schaffen, mit der die Taktzeit weiter reduziert werden kann. Zudem soll sie einen geringeren apparativen Aufwand erfordern und eine flexible Umrüstung auf unterschiedliche Spritzlinge mit geringem Aufwand ermöglichen.

Zur Lösung dieser Aufgabe wird vorgeschlagen, dass die Halterung (6) für das Spritzgießwerkzeug durch eine Schließeinheit (8) gebildet ist, die eine feststehende, düsenseitige Maschinenplatte (9) und eine bewegliche, schließseitige Maschinenplatte (10) aufweist, auf denen schließseitig eine Trägerplatte (41) und düsenseitig eine Heißkanalverteilerplatte (42) angeordnet sind, zwischen denen ein Formeinsatzpaar (7) einsetzbar ist und dass an der beweglichen Maschinenplatte (10) oder der Trägerplatte (41) eine Mitnahmehalterung (34) für das Formeinsatzpaar (7) vorgesehen ist.

Mit dieser Spritzgießmaschine ist der Aufwand erheblich reduziert, weil nur noch eine einzige Schließeinheit erforderlich ist, welche hauptsächlich nur den notwendigen Gegendruck zum Halten des jeweiligen Formeinsatzpaares gegen den Anpressdruck der Spritzdüse(n) aufbringen muss, da die Formhälften von den Verriegelungsmittel zusammengehalten werden. Der Spritzdruck ist insbesondere bei durch Treibmittel aufschäumenden Kernen der Spritzlinge vergleichsweise gering und kann beispielsweise 200 bar betragen. Die Formen können daher aus Leichtmetall, insbesondere Aluminium, gegebenenfalls auch aus Kunststoff bestehen, wodurch eine einfache, kostengünstige Bearbeitung möglich ist.

Beim Öffnen der Schließeinheit wird das Formeinsatzpaar mitgenommen und dabei von der düsenseitige Platte entfernt, so dass mit dem Öffnen der Schließeinheit sofort Platz zum Einsetzen und Klemmen eines neuen Formeinsatzpaares zur Verfügung steht. Dies trägt mit zu einem schnellen Wechsel der Formeinsatzpaare bei der Spritzstation bei.

Nach dem Abkühlen der in dem geschlossenen Formeinsatzpaar befindlichen Spritzlinge wird die Spritzeinheit zu der Entformstation umgesetzt, geöffnet und die Spritzlinge ausgeworfen. Die leere Spritzeinheit wird geschlossen und verriegelt und steht dann wieder für einen nächsten Spritzvorgang zur Verfügung.
Diese Vorgänge wiederholen sich mit weiteren Formeinsatzpaaren in einem Kreislauf, bis das erste Formeinsatzpaar nach dem Entformen wieder zur Verfügung steht. Eine entsprechende Anzahl von Formeinsatzpaaren ist hierfür erforderlich.
Bei der Entformstation stehen Mittel zum Entriegeln und Verriegeln der Verriegelungselemente und zum Öffnen und Schließen der Formeinsatzpaare sowie Mittel zum Entfernen des Spritzangusses zur Verfügung.

Es besteht in vorteilhafter Weise die Möglichkeit, wahlweise unterschiedliche Spritzlinge zu fertigen, und, in Anpassung an unterschiedliche Fertigungszeiten und unterschiedliche, geforderte Stückzahlen eine gemischte Produktion vorzusehen, wodurch die Leistung der Spritzgießmaschine optimal ausgenutzt werden kann. So kann während der Abkühlzeit von voluminösen Spritzlingen das Spritzen von einem oder mehreren kleineren Spritzlingen mit kürzerer Zykluszeit eingeschoben werden. Dabei kann dieses Einschleusen von kleineren Spritzlingen beziehungsweise von Spritzlingen mit geringerem Volumen flexibel mit unterschiedlichen Spritzlingen erfolgen, deren Einzel- oder Gesamtzykluszeiten der Einzel-Zykluszeit von einem voluminöserem Spritzling oder auch von mehreren dieser, nacheinander gespritzten Spritzlinge entsprechen kann.
Die bereitgestellten Formeinsatzpaare können somit für unterschiedliche Spritzlinge ausgebildet sein und stehen für eine flexible Produktion wahlweise zur Verfügung.

Die Transportvorrichtung steht insbesondere mit einer Steuerung in Verbindung, die einen Speicher für die Ablagepositionen der Formeinsätze sowie die diesen zugeordneten Spritzparameter und Kühlparameter aufweist, so dass beim wahlweisen Ergreifen eines Formeinsatzes gleichzeitig auch die zugehörigen Kenndaten für den Spritzvorgang zur Verfügung stehen.

Die Halterung für das Spritzgießwerkzeug bei der Spritzstation ist zweckmäßigerweise durch eine handelsübliche Schließeinheit gebildet. Eine relativ kleine, kostengünstige Schließeinheit genügt, weil während des Spritzvorgangs im Wesentlichen nur der Druck zum Gegenhalten entsprechend dem Anpressdruck der Spritzdüsen aufgebracht werden muss.

Vorzugsweise ist die Transportvorrichtung durch eine Roboter-Handlingeinrichtung insbesondere mit einem Knickarmroboter gebildet zum Umsetzen der Formeinsatzpaare zwischen den einzelnen Stationen. Der Knickarmroboter kann alle anfallenden Positionieraufgaben beim Umsetzen der Formeinsatzpaare zwischen den einzelnen Stationen schnell und präzise übernehmen.

Zusätzliche Ausgestaltungen der Erfindung sind in den weiteren Unteransprüchen aufgeführt. Nachstehend ist die Erfindung mit ihren wesentlichen Einzelheiten anhand der Zeichnungen noch näher erläutert.

Es zeigt etwas schematisiert:
- Fig. 1: eine Aufsicht einer erfindungsgemäßen Spritzgieß- maschine mit einer Spritzstation, einer Entformsta- tion sowie vier Ablage- und Kühlstationen und einer zentral angeordneten Transportvorrichtung,
- Fig. 2 und Fig. 3: Aufsichten der in Fig. 1 gezeigten Spritzgießma- schine in unterschiedlichen Arbeitspositionen,
- Fig. 4 bis Fig. 6: teilweise im Schnitt gehaltene Seitenansichten der in Fig. 1 bis Fig. 3 gezeigten Spritzgießmaschine in unterschiedlichen Arbeitspositionen
- Fig. 7: eine Außenseitenansicht einer düsenseitigen Form- hälfte mit Verteilerkanälen und Verriegelungsmit- teln,
- Fig. 8: eine teilweise im Schnitt gehaltene Teilseitenan- sicht einer Spritzeinheit mit mehreren Spritzdüsen und
- Fig. 9 bis Fig. 11: Detailansichten im Bereich von Verriegelungsmitteln für ein Formeinsatzpaar.

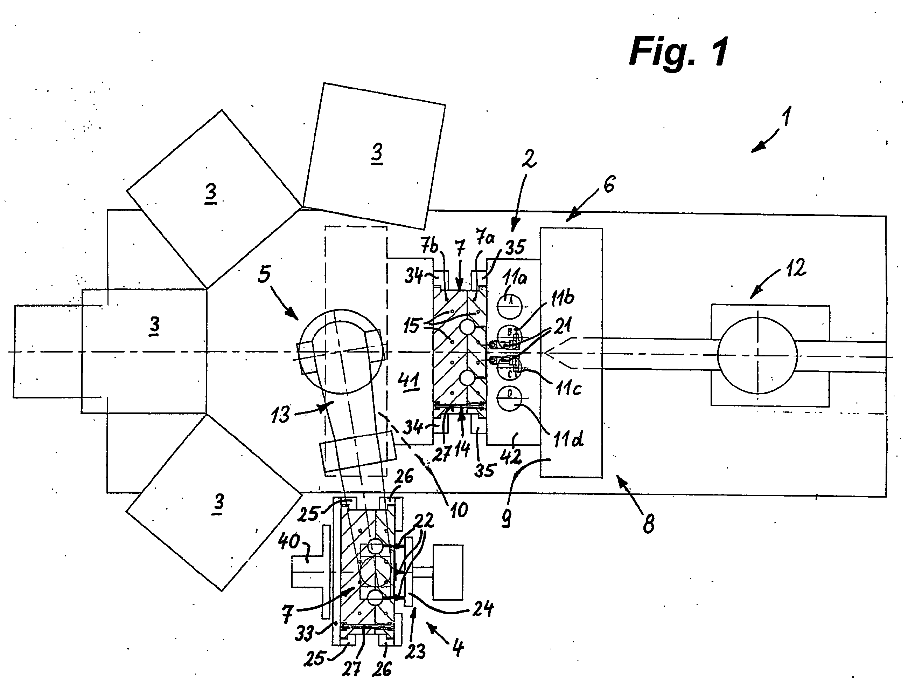

Eine in den Figuren 1 bis 6 gezeigte Spritzgießmaschine 1 dient zum Spritzen von Spritzlingen 32 mit geschäumtem Kern. Sie weist im Ausführungsbeispiel eine Spritzstation 2, vier Ablage- und Kühlstationen 3, sowie eine Entformstation 4 auf. Diese Stationen 2 bis 4 sind um eine Transportvorrichtung 5 herum angeordnet.
Bei der Spritzstation ist eine Halterung 6 für jeweils ein Formeinsatzpaar 7, bestehend aus einer düsenseitigen Formhälfte 7a und einer schließseitigen Formhälfte 7b, vorgesehen. Das Formeinsatzpaar 7 bildet im Wesentlichen ein Spritzgießwerkzeug. Die Halterung 6 dafür ist durch eine Schließeinheit 8 gebildet, die eine feststehende, düsenseitige Maschinenplatte 9 und eine bewegliche, schließseitige Maschinenplatte 10 aufweist. Auf der Maschinenplatte 9 befindet sich eine Heißkanalverteilerplatte 42 und auf der Maschinenplatte 10 eine Trägerplätte 41 für eine Mitnahmehalterung 34. Zwischen diesen Platten 41,42 ist ein Formeinsatzpaar 7 für einen Spritzvorgang einsetzbar. Im Ausführungsbeispiel sind insgesamt fünf Spritzaggregate vorgesehen, wobei vier Spritzaggregate 11a bis 11d zum Spritzen einer Außenhülle von Spritzlingen dient, während ein Spritzaggregat 12 zum Spritzen von Kernmaterial dieser Spritzlinge vorgesehen ist. Es lassen sich damit im sogenannten Co-Injektionsverfahren Spritzlinge mit geschäumtem Kern herstellen.

Die Transportvorrichtung 5, die zentral zu den vorzugsweise kreisförmig um sie herum angeordneten Stationen 2 bis 4 angeordnet ist, ist im Ausführungsbeispiel durch eine Roboter-Handling-Einrichtung mit einem Knickarm-Roboter 13 gebildet, der 6-achsig ausgebildet ist und der die Formeinsatzpaare 7, von denen mehrere in Umlauf sind, zwischen den Stationen 2 bis 4 umsetzen kann. Der Knickarm-Roboter 13 hat einen Greifarm, der an entsprechend angepassten Stellen der Formeinsatzpaare 7 angreifen kann.

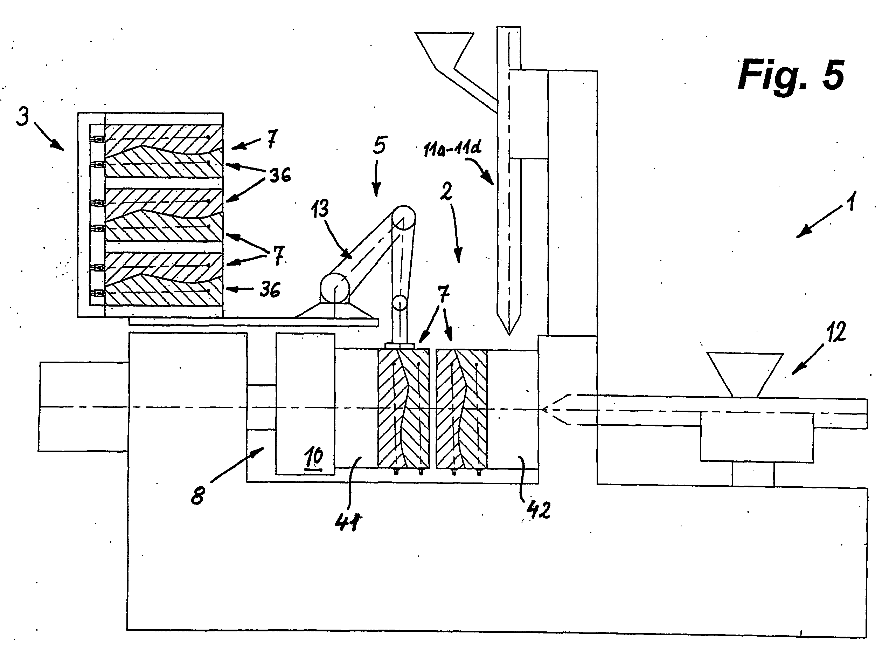

Die Formeinsatzpaare 7 weisen Verriegelungsmittel 14 auf, mit denen sie beziehungsweise ihre beiden Formhälften 7a,7b auch nach der Entnahme aus der geöffneten Schließeinheit 8 und beim Transport zu den Ablage- und Kühlstationen beziehungsweise zu der Entform-Station 4 zusammengehalten werden. Die Formeinsatzpaare 7 können dadurch unmittelbar nach Beendigung des Spritzvorganges aus der Schließeinheit 8 entnommen werden, so dass diese dann sofort wieder für einen nächsten Spritzvorgang mit einem weiteren Formeinsatzpaar 7 zur Verfügung steht. Die Zykluszeit betreffend den Spritzvorgang kann somit äußerst kurz gehalten werden. Durch die auch während des Spritzvorganges wirksamen Verriegelungsmittel 14, die die Formhälften 7a, 7b zusammenhalten, kann als Schließeinheit 8 eine relativ kleine Schließeinheit verwendet werden, die in der Lage ist, das Formeinsatzpaar 7 mit genügendem Druck an die feststehende Maschinenplatte 9 der Schließeinheit anzudrücken.
Nach dem Spritzvorgang, der je nach Spritzling beispielsweise 15 Sekunden in Anspruch nehmen kann, wird die Schließeinheit 8 geöffnet, wobei das Formeinsatzpaar 7 von der beweglichen Maschinenplatte 10 der Schließeinheit 8 beziehungsweise der darauf befindlichen Trägerplatte 41 mitgenommen wird, wie dies in Figur 5 angedeutet ist. Dazu weist die an der schließseitigen Formhälfte 7b angreifende Trägerplatte 41 eine Mitnahmehalterung 34 auf. Auch an der von der düsenseitigen Maschinenplatte 9 der Schließeinheit 8 gehaltenen Heißkanalverteilerplatte 42 ist eine Halterung 35 vorgesehen. Beide Halterungen sind unabhängig voneinander jeweils in Halte- und Lösestellung verstellbar. Beim Öffnen der Schließeinheit 8 kann so die Mitnahmehalterung 34 geschlossen bleiben, während und die Halterung 35 geöffnet wird und das Formeinsatzpaar 7 freigibt.

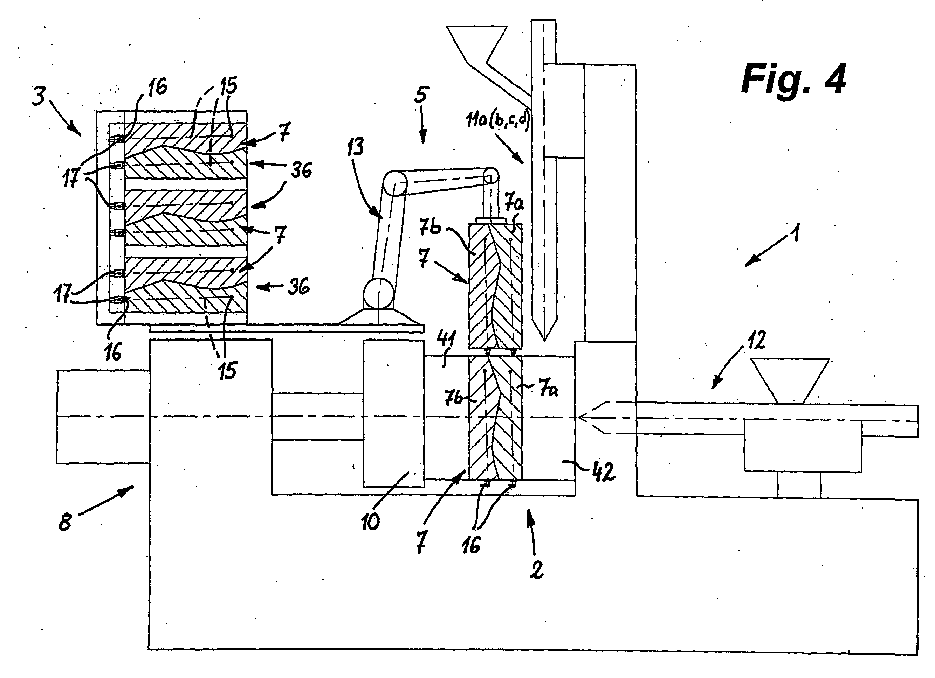

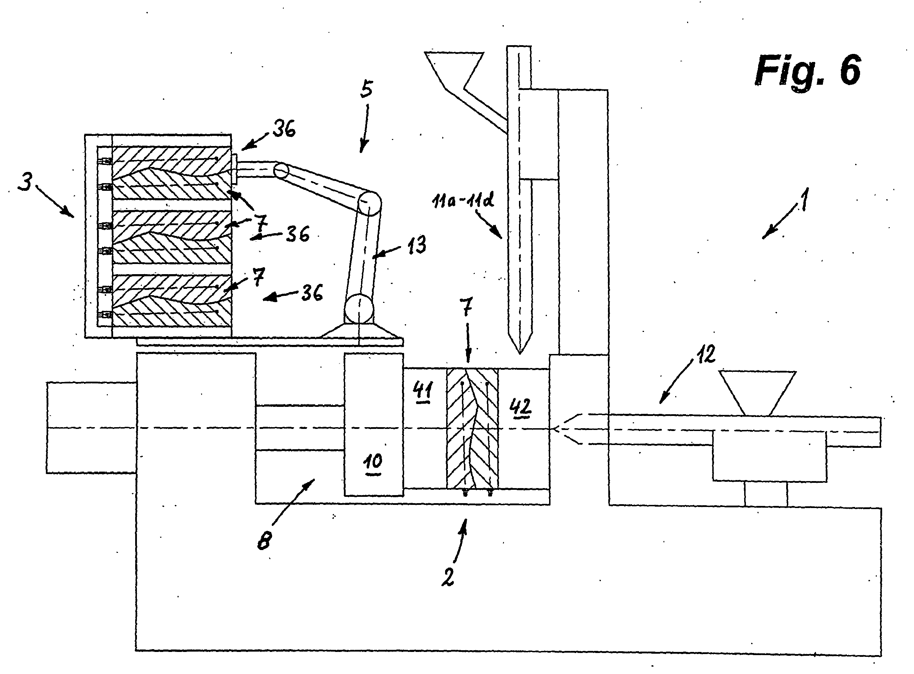

In Figur 4 ist erkennbar, dass bereits bei geschlossener Schließeinheit 8 ein leeres Formeinsatzpaar 7 oberhalb des in der Schließeinheit 8 befindlichen Formeinsatzpaares 7 von dem Knickarm-Roboter 13 in Bereitschaftsstellung positioniert werden kann. Nach dem Öffnen der Schließeinheit 8, wobei das darin befindliche Formeinsatzpaar 7 mit der beweglichen Maschinenplatte 10 beziehungsweise von der Trägerplatte 41 mitgenommen wird, wird das in Bereitschaftsstellung befindliche Formeinsatzpaar 7 abgesenkt und befindet sich dann in einer Position, wo sie mit Hilfe der Halterung 35 mit der feststehenden Platte 42 verbunden ist.
Nach dem Öffnen der Mitnahmehalterung 34 an der beweglichen Platte 41 kann das Formeinsatzpaar 7 von dem Knickarm-Roboter 13 nach oben entnommen und einer Ablage- und Kühlstation 3 zugeführt werden (Fig.6). Diese Ablage eines mit Spritzlingen gefüllten Formeinsatzpaares 7 kann bei einer beliebigen Ablage- und Kühlstation 3 erfolgen, wo Platz vorhanden oder dafür vorgesehen ist. In den Figuren 4 bis 6 ist gut erkennbar, dass die Ablage- und Kühlstationen 3 vorzugsweise mehrere Ablageetagen 36 aufweisen, so dass dort platzsparend mehrere Formeinsatzpaare 7 übereinander abgelegt werden können.

Um die Abkühlzeit der in den Formeinsatzpaaren 7 befindlichen Spritzlinge zu verkürzen, kann eine aktive Kühlung vorgesehen sein. Dazu können die Formeinsatzpaare 7 Kühlkanäle 15 sowie Anschlussstellen 16 für bei den Ablage- und Kühlstationen 3 angeordnete Kühlmediumanschlüsse 17 aufweisen. Das Kühlmedium kann flüssig oder gasförmig sein. Durch eine aktive Kühlung wird die Abkühlzeit verkürzt und in der Folge kommt man mit einer geringeren Anzahl von im Umlauf befindlichen Formeinsatzpaaren 7 aus, da diese entsprechend schneller wieder für einen Spritzvorgang zur Verfügung stehen. Die Kosten der Gesamtanlage können dadurch reduziert werden.

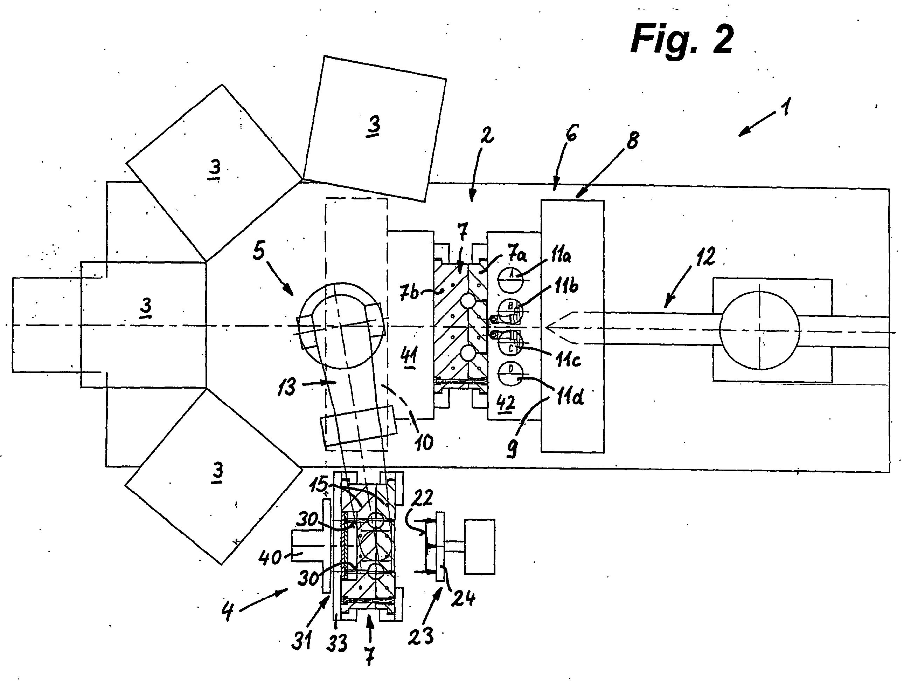

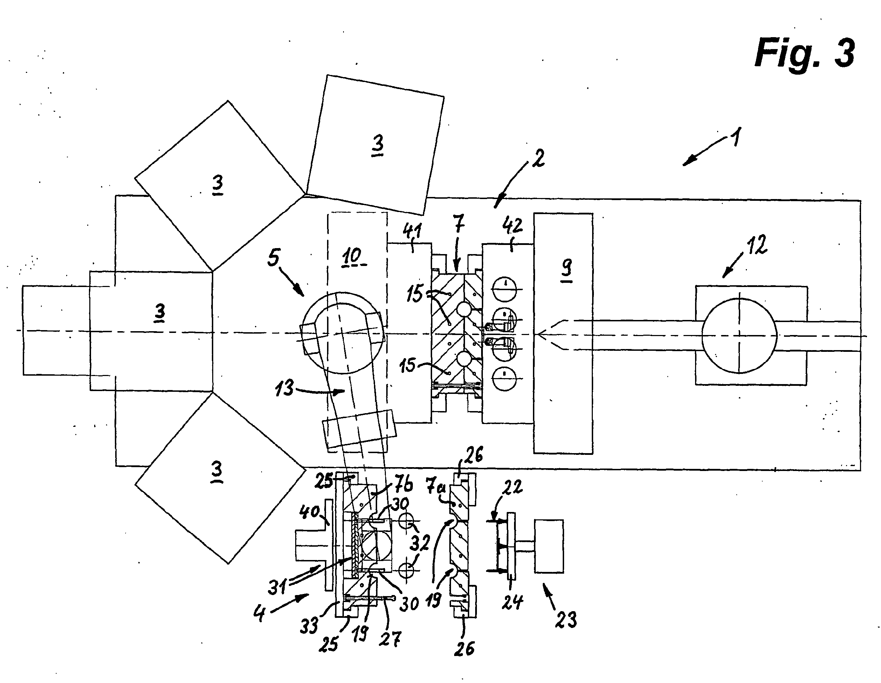

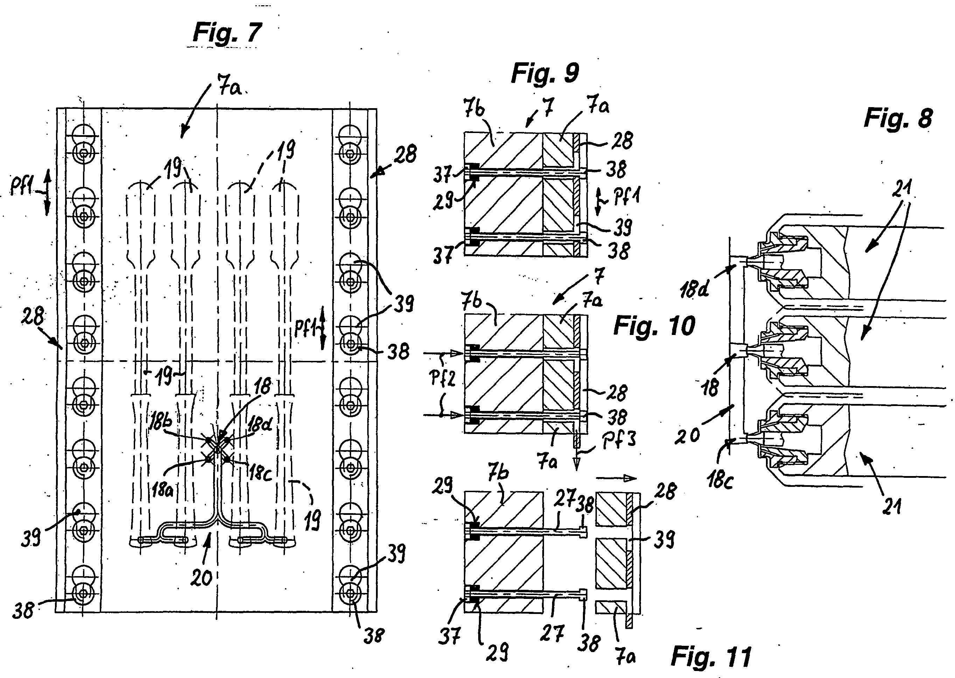

Nach der Abkühlphase werden die gefüllten Formeinsatzpaare 7 mit Hilfe des Knickarm-Roboters 13 zu der Entformstation 4 umgesetzt, wo sie geöffnet und die fertigen Spritzlinge entformt und dabei entnommen werden.
Das Spritzgießwerkzeug ist im Ausführungsbeispiel als Dreiplattenwerkzeug ausgebildet, wobei als dritte Platte die düsenseitige Heißkanalverteilerplatte 42 dient, bei der auch die Spritzaggregate 11a bis 11d angeordnet sind. Zwischen dieser düsenseitige Platte 42 und der düsenseitigen Formhälfte 7a befindet sich somit eine zweite Trennebene. In der düsenseitigen Aufspannplatte ist das Heißkanalverteilersystem integriert. Die düsenseitige Formhälfte 7a weist entsprechend der Anordnung der zu den Spitzaggregaten 11a bis 11d sowie dem Spritzaggregat 12 gehörenden Nadelverschlussdüsen 21 (Figur 8) Anspritzstellen 18, 18a bis 18d auf, die in Figur 7 gut erkennbar sind. Diese Anspritzstellen führen über einen Kaltverteiler 20 zu den einzelnen Kavitäten 19 in der düsenseitigen Formhälfte 7a. Im Ausführungsbeispiel sind in den beiden Formhälften 7a, 7b strichliniert angedeutete Kavitäten für vier längliche Spritzlinge, zum Beispiel WC-Bürstenkörper vorgesehen. Das Spritzgießwerkzeug kann sowohl als Einfachform zum Herstellen eines Spritzlings pro Schuss als auch als Mehrfachform für zum Beispiel vier oder sechs Spritzlinge ausgebildet sein. Die Anzahl der Spritzaggregate ist variabel.
Nach dem Spritzvorgang wird das geschlossene Formeinsatzpaar 7 zunächst zur Ablage- und Kühlstation 3 umgesetzt und danach zu der Entformstation 4.
In Sonderfällen, zum Beispiel wo nur vergleichsweise kurze Abkühlzeiten erforderlich sind, können die Formeinsatzpaare 7 auch direkt von der Spritzstation 2 in die Entformstation 4 umgesetzt werden. Dabei kann eine aktive Kühlung für die Formeinsatzpaare 7 im Bereich der Entformstation 4 vorgesehen sein, vergleichbar mit der bei den Ablage- und Kühlstation 3 vorgesehenen. Bedarfsweise kann in diesem Fall eine Abkühlphase bei der Entformstation 4 dem Entformen vorgeschaltet sein.
Bei der Entformstation 4 ist unter anderem eine Vorrichtung 23 zum Entfernen des Angusses 22 vorgesehen, die eine Angusspicker-Platte 24 mit Greifelementen hat, mit denen der Anguss 22 erfasst (Figur 1) und anschließend abgerissen werden kann, wie dies in Figur 2 dargestellt ist. Das Formeinsatzpaar 7 ist bei der Entformstation 4 in Halter 25, 26 eingesetzt, die mittels hier nicht dargestellter Hubelemente relativ zueinander beweglich sind, um die Formhälften 7a, 7b des Formeinsatzpaares 7 nach dem Entriegeln öffnen und dabei auseinander bewegen zu können. Für die Hubbewegung der Halter 25, 26 können Hubzylinder, insbesondere Hydraulikzylinder vorgesehen sein.
Das Öffnen des Formeinsatzpaares 7 erfolgt somit nach dem Abtrennen des Angusses 22 und nachdem die Verriegelungsmittel 14 für das Zusammenhalten der beiden Formhälften 7a, 7b geöffnet wurden.
Die Verriegelungsmittel 14 weisen Haltebolzen 27 auf, welche die Formhälften 7a, 7b durchsetzen. Sie sind, wie in Fig.7 erkennbar, an beiden Längsseiten randnah vorgesehen, wobei deren Anzahl und Anordnung unter anderem von der geforderten Zuhaltekraft und der Geometrie der Form abhängt. In den Fig.1 bis 3 sind die Haltebolzen 27 nur einseitig dargestellt. Die Haltebolzen 27 sind von der Außenseite der schließseitigen Formhälfte 7b in Bohrungen eingesetzt und liegen in äußeren Bohrungserweiterungen mit ihren Bolzenköpfen 37 auf Federpaketen 29 auf (vergleiche Figur 9 bis 11). Über die Federpakete 29 werden die Haltebolzen 27 vorgespannt und mit dieser Vorspannung wird die Zuhaltekraft der Form bestimmt.
Die anderen, düsenseitigen Enden der Haltebolzen 27 weisen ebenfalls Bolzenköpfe 38 auf, die in Verriegelungsstellung durch Verriegelungsschienen 28 an der Außenseite der düsenseitigen Formhälfte 7a gehalten sind.
Die Bolzenköpfe 38 durchgreifen Schlüssellochöffnungen 39 der Verriegelungsschienen 28 und durch Längsverschieben der Verriegelungsschienen 28 gemäß den Doppelpfeilen Pf1 in Figur 7 und 9 lassen sie sich in die in Figur 7 und 9 gezeigte Verriegelungsstellung bringen oder aber in die in Figur 10 gezeigte Freigabestellung, wo die Köpfe der Haltebolzen 27 im erweiterten Bereich der Schlüssellochöffnungen 39 liegen, so dass die Bolzenköpfe 38 hindurchtreten können. In dieser Lage kann das Formeinsatzpaar geöffnet werden, wie dies in Figur 11 und 3 gezeigt ist.
In geöffneter Lage des Formeinsatzpaares 7 wird eine Auswerfereinheit 31 mit Auswerferstiften 30 aktiviert, mittels der die Spritzlinge 32 ausgeworfen werden. Die Auswerfereinheit 31 ist teilweise in die schließseitige Formhälfte 7b integriert, was in Fig.2 und 3 gezeigt ist. Ein äußeres, bei der Entformstation 4 befindliches Betätigungsteil 40 dient als Antrieb für die Auswerfereinheit 31. In Figur 2 befindlichen sich die Auswerferstifte 30 in zurückgezogener Lage, während sie sich in Fig.3 in Auswerfstellung befinden, wobei die Spritzlinge 32 bereits ausgeworfen sind.

Um die in Schließstellung des Formeinsatzpaares 7 federbeaufschlagten, vorgespannten Haltebolzen 27 (Fig.7,9) für den Öffnungsvorgang von der Vorspannung zu entlasten, werden die Haltebolzen 27 rückseitig von der schließseitigen Formhälfte 7b her mittels nicht dargestellter Druckbolzen beaufschlagt, die sich in der rückseitigen Platte 33 befinden können, welche zu dem Halter 25 bzw. der Auswerfereinheit 31 gehört. Durch die Pfeile Pf2 in Fig.10 ist diese Druckbeaufschlagung der Haltebolzen 27 angedeutet. Die Verriegelungsschienen 28 lassen sich dann gemäß dem Pfeil Pf3 in Figur 10 aus der in den Figuren 7 und 9 gezeigte Verriegelungsstellung in die in Figur 10 gezeigte Freigabestellung bringen. Die Verriegelung ist dann freigegeben und die beiden Formhälften 7a, 7b können geöffnet werden, wie dies in Fig.11 gezeigt ist.

Wie bereits vorerwähnt, ist die Spritzgießmaschine zum Spritzen von Spritzlingen mit geschäumten Kernen ausgebildet, wobei im Ausführungsbeispiel das Spritzaggregat 12 zum Spritzen des Kernmateriales dient, während die Spritzaggregate 11a bis 11d zum Spritzen unterschiedlicher Außenhüllen dienen. Insbesondere können damit Außenhüllen in verschiedenen Farben gespritzt werden. Im Ausführungsbeispiel sind vier Spritzaggregate 11a bis 11d zum Spritzen von vier unterschiedlichen Außenhüllen vorgesehen. Durch den Aufbau des Spritzwerkzeugs als Dreiplattenwerkzeug ist problemlos eine gemischte mehrfarbige Produktion und eine Umstellung von Schuss zu Schuss ohne verlustreiche Farbwechsel möglich. Durch Einsatz von Nadelverschlussdüsen ist jeweils nur die einer bestimmten Farbe zugeordnete Düse geöffnet, während die anderen geschlossen sind. Die Verbindungskanäle innerhalb des Kaltverteilers 20 (Figur 7) werden zwar beim Spritzen von diesem einen Randschichtmaterial mitgefüllt, vor dem Entformen wird jedoch bei der Entformstation 4 der im Kaltverteiler 20 befindliche Anguss 22 entfernt. Dadurch ist der komplette Angussbereich frei, so dass beim nächsten Spritzschuss problemlos eine andere Farbe gespritzt werden kann. Außer dieser Möglichkeit, pro Schuss unterschiedliche Farben zu spritzen, besteht auch die Möglichkeit, bei einem Schuss mehrere Farben zu spritzen.

In den Ablage- und Kühlstationen können Formeinsatzpaare für unterschiedliche Spritzlinge bereitgestellt werden. Es ist eine gemischte Produktion unterschiedlicher Spritzlinge möglich, wobei die Reihenfolge durch Abstimmung auf die unterschiedlichen Spritz- und Abkühlzeiten vorgenommen wird. Beispielsweise können während des Abkühlens von voluminösen Spritzlingen mehrere Spritzlinge mit kürzeren Abkühlzeiten gespritzt werden, so dass die Spritzgießmaschine insgesamt optimal ausgenutzt werden kann.

Die Spritzparameter und Kühlparameter der einzelnen, unterschiedlichen Spritzlinge können in einem zu einer Steuerung gehörenden Speicher abgelegt sein, wobei dieser Speicher auch die Ablagepositionen der Formeinsätze beinhaltet. Der mit der Steuerung verbundene Knickarm-Roboter oder dergleichen Handling-Einrichtung kann dadurch in einem passenden Programmablauf gesteuert werden, in dem auch die Spritzstation 2 und die Entformstation 4 eingebunden sind.

## Patentansprüche

1. Spritzgießmaschine (1) zum Spritzen von Spritzlingen (32) mit einem Kern und einer aus Mantelmaterial bestehenden Hülle, mit einer Spritzstation (2) und einem bei dieser in eine Halterung (6) einsetzbaren Spritzgießwerkzeug, das ein Formeinsatzpaar (7) aufweist, dessen Formeinsätze eine düsenseitige Formhälfte (7a) und eine schließseitige Formhälfte (7b) bilden, wobei mehrere Formeinsatzpaare (7) vorgesehen sind, die Verriegelungsmittel zum Zusammenhalten der Formeinsatzpaare (7) bei geöffneter Halterung (6) aufweisen und in verriegelter Lage aus der Halterung (6) entnehmbar sind, wobei sie wenigstens eine Ablage- und Kühlstation (3) und wenigstens eine Entformstation (4) aufweist und wobei eine Transportvorrichtung (5) zum Transportieren der Formeinsatzpaare (7) zwischen den Stationen (2 bis 4) mit wenigstens einer Spritzstation (2), wenigstens einer Ablage- und Kühlstationen (3) und wenigstens einer Entformstation (4) vorgesehen ist, **dadurch gekennzeichnet, dass** die Halterung (6) für das Spritzgießwerkzeug durch eine Schließeinheit (8) gebildet ist, die eine feststehende, düsenseitige Maschinenplatte (9) und eine bewegliche, schließseitige Maschinenplatte (10) aufweist, auf denen schließseitig eine Trägerplatte (41) und düsenseitig eine Heißkanalverteilerplatte (42) angeordnet sind, zwischen denen ein Formeinsatzpaar (7) einsetzbar ist und dass an der beweglichen Maschinenplatte (10) oder der Trägerplatte (41) eine Mitnahmehalterung (34) für das Formeinsatzpaar (7) vorgesehen ist.

2. Maschine nach Anspruch 1, **dadurch gekennzeichnet, dass** die Transportvorrichtung durch eine Roboter-Handlingeinrichtung insbesondere mit einem Knickarmroboter (13) gebildet ist zum Umsetzen der Formeinsatzpaare (7) zwischen den einzelnen Stationen (2 bis 4).

3. Maschine nach Anspruch 1 oder 2, **dadurch gekennzeichnet, dass** mehrere Ablage- und Kühlstationen (3) und wenigstens eine Entformstation (4) sowie die Spritzstation vorzugsweise kreisförmig um die Transportvorrichtung (13) herum angeordnet sind.

4. Maschine nach einem der Ansprüche 1 bis 3, **dadurch gekennzeichnet, dass** die Ablage- und Kühlstationen (3) jeweils mehrere Ablageetagen (36) aufweisen.

5. Maschine nach einem der Ansprüche 1 bis 4, **dadurch gekennzeichnet, dass** den Ablage- und Kühlstationen (3) Kühlmittel zum Abkühlen der Formeinsatzpaare (7) und des oder der darin befindlichen Spritzlinge zugeordnet sind.

6. Maschine nach Anspruch 5, **dadurch gekennzeichnet, dass** die Formeinsatzpaare (7) Kühlkanäle (15) für ein Kühlmedium sowie Anschlussstellen (16) für vorzugsweise bei den Ablage- und Kühlstationen (3) angeordnete Kühlmediumanschlüsse (17) aufweisen.

7. Maschine nach einem der Ansprüche 1 bis 6, **dadurch gekennzeichnet, dass** sie als Coinjektionsmaschine ausgebildet ist und wenigstens ein Spritzaggregat (11a bis 11d) zum Spritzen von Randschichtmaterial sowie wenigstens ein Spritzaggregat (12) zum Spritzen von Kernwerkstoff aufweist.

8. Maschine nach Anspruch 7, **dadurch gekennzeichnet, dass** die Coinjektionsmaschine mehrere Spritzaggregate (11a bis 11d) zum Spritzen von Randschichtmaterial aufweist.

9. Maschine nach einem der Ansprüche 1 bis 8, **dadurch gekennzeichnet, dass** das Spritzgießwerkzeug als Dreiplattenwerkzeug mit einer der düsenseitigen Formhälfte (7a) zugeordneten, düsenseitigen Maschinenplatte (9) ausgebildet ist, die insbesondere als Heißkanalverteilersystem ausgebildete Zuführungen für Randschichtmaterial und Kernwerkstoff und Spritzaggregate (11a bis 11d, 12) vorzugsweise mit Nadelverschlussdüsen (21) zum Spritzen dieser Werkstoffe in einen Kaltverteiler (20) der düsenseitigen Formhälfte (7a) aufweist.

10. Maschine nach einem der Ansprüche 1 bis 9, **dadurch gekennzeichnet, dass** die düsenseitigen Formhälfte (7a) mehrere Angußstellen (18a bis 18d) für unterschiedliches Randschichtmaterial sowie eine Angußstelle (18) für den Kernwerkstoff aufweist.

11. Maschine nach einem der Ansprüche 1 bis 10, **dadurch gekennzeichnet, dass** die Verriegelungsmittel (14) der Formeinsatzpaare (7) deren Formhälften quer durchsetzende Haltebolzen (27) aufweisen, die vorzugsweise düsenseitig mit lösbaren, vorzugsweise als Verriegelungsschienen (28) ausgebildete Verriegelungselementen zusammenwirken.

12. Maschine nach einem der Ansprüche 1 bis 11, **dadurch gekennzeichnet, dass** die Entformstation (4) Mittel zum Entriegeln und Verriegeln der Verriegelungselemente (28) und zum Öffnen und Schließen der Formeinsatzpaare (7) sowie Mittel (23) zum Entfernen des Spritz-Angusses (22) aufweist.

13. Maschine nach einem der Ansprüche 1 bis 12, **dadurch gekennzeichnet, dass** die an der schließseitigen Formhälfte (7b) angreifende, mit der beweglichen, schließseitigen Maschinenplatte (10) der Schließeinheit (8) oder einer Trägerplatte (41) verbundene Mitnahmehalterung (34) und eine an der düsenseitigen Formhälfte (7a) angreifende, mit der düsenseitigen Maschinenplatte (9) oder dergleichen der Schließeinheit (8) verbundene Halterung (35) jeweils in Halte- und Lösestellung verstellbar sind.

14. Maschine nach einem der Ansprüche 1 bis 13, **dadurch gekennzeichnet, dass** eine Steuerung für die vorzugsweise durch eine Roboter-Handlingeinrichtung gebildete Transportvorrichtung (13) vorgesehen ist, die einen Speicher für die Ablagepositionen der Formeinsatzpaare (7) sowie die diesen zugeordneten Spritzparameter und Kühlparameter aufweist.

## Claims

1. Injection moulding machine (1) for injection-moulding moulded parts (32) having a core and a shell consisting of a casing material, with an injection-moulding station (2) and an injection moulding tool that can be inserted in a clamp (6) at said injection-moulding station (2), said tool comprising a pair of moulding inserts (7) the moulding Inserts of which form a mould half (7a) on the nozzle side and a mould half (7b) on the closed side, wherein a plurality of pairs of moulding inserts (7) are provided which comprise locking means for holding the pairs of moulding inserts (7) together when the clamp (6) is opened and which can be removed from the clamp (6) in the locked state, said injection moulding machine comprising at least one depositing and cooling station (3) and at least one demoulding station (4) and wherein a transporting means (5) is provided for transporting the pairs of moulding inserts (7) between the stations (2 to 4), with at least one injection-moulding station (2), at least one depositing and cooling station (3) and at least one demoulding station (4), **characterised in that** the clamp (6) for the injection-moulding tool is formed by a closure unit (8) which comprises a fixed machine plate (9) on the nozzle side and a movable machine plate (10) on the closed side, on which are disposed a carrier plate (41) on the closed side and a hot-runner distribution plate (42) on the nozzle side, between which a pair of moulding inserts (7) can be inserted, and **in that** a moving clamp (34) for the pair of moulding inserts (7) is provided on the movable machine plate (10) or the carrier plate (41).

2. Machine according to claim 1, **characterised in that** the transporting means is formed by a robot handling device, particularly with an articulated arm robot (13), for transferring the pairs of moulding inserts (7) between the individual stations (2 to 4).

3. Machine according to claim 1 or 2, **characterised in that** a plurality of depositing and cooling stations (3) and at least one demoulding station (4) and the injection-moulding station are preferably arranged in a circle around the transporting means (13).

4. Machine according to one of claims 1 to 3, **characterised in that** the depositing and cooling stations (3) each have a plurality of depositing shelves (36).

5. Machine according to one of claims 1 to 4, **characterised in that** cooling means for cooling the pairs of moulding inserts (7) and the moulded part(s) contained therein are associated with the depositing and cooling stations (3).

6. Machine according to claim 5, **characterised in that** the pairs of moulding inserts (7) comprise cooling channels (15) for a cooling medium and connecting points (16) for cooling medium connectors (17) preferably provided at the depositing and cooling stations (3).

7. Machine according to one of claims 1 to 6, **characterised in that** it is configured as a co-injection machine and comprises at least one injection-moulding assembly (11a to 11d) for injecting edge laminating material and at least one injection-moulding assembly (12) for injecting core material.

8. Machine according to claim 7, **characterised in that** the co-injection machine comprises a plurality of injection-moulding assemblies (11a to 11d) for injecting edge laminating material.

9. Machine according to one of claims 1 to 8, **characterised in that** the injection-moulding tool is configured as a three-plate tool with a machine plate (9) on the nozzle side, associated with the mould half (7a) on the nozzle side, which comprises inlets for edge laminating material and core material which are configured in particular as a hot-runner distribution system, and injection-moulding assemblies (11a to 11d, 12), preferably with needle shut-off nozzles (21), for injecting these materials into a cold distributor (20) of the mould half (7a) on the nozzle side.

10. Machine according to one of claims 1 to 9, **characterised in that** the mould half (7a) on the nozzle side comprises a plurality of sprue points (18a to 18d) for a different edge laminating material and a sprue point (18) for the core material.

11. Machine according to one of claims 1 to 10, **characterised in that** the locking means (14) of the pairs of moulding inserts (7) comprise retaining bolts (27) that pass transversely through the mould halves thereof, which preferably cooperate on the nozzle side with releasable locking elements, preferably in the form of locking rails (28).

12. Machine according to one of claims 1 to 11, **characterised in that** the demoulding station (4) comprises means for unlocking and locking the locking elements (28) and for opening and closing the pairs of moulding inserts (7), and means (23) for removing the injection-moulding sprue (22).

13. Machine according to one of claims 1 to 12, **characterised in that** the moving clamp (34) acting on the mould half (7b) on the closed side and connected to the movable machine plate (10) of the closure unit (8) on the closed side or to a carrier plate (41), and a clamp (35) acting on the mould half (7a) on the nozzle side and connected to the machine plate (9) or the like on the nozzle side of the closure unit (8) are each movable into the clamping and release positions.

14. Machine according to one of claims 1 to 13, **characterised in that** a control is provided for the transporting means (13) preferably formed by a robot handling device, which has a memory for storing the depositing positions of the pairs of moulding inserts (7) and the injection-moulding parameters and cooling parameters associated therewith.

## Revendications

1. Machine (1) de moulage par injection pour mouler par injection des pièces moulées (32) dotées d'un coeur et d'une peau constituée d'une matière de peau, avec un poste d'injection (2) et avec un moule d'injection qui peut, à ce poste, être inséré dans un support (6) et qui comprend une paire (7) de pièces rapportées dont les pièces rapportées forment un demi-moule (7a) côté buse et un demi-moule (7b) côté fermeture, sachant qu'il est prévu plusieurs paires (7) de pièces rapportées qui présentent des moyens de verrouillage pour solidariser les paires (7) de pièces rapportées lorsque le support (6) est ouvert et qui peuvent être retirées du support (6) en position verrouillée, sachant que la machine présente au moins un poste (3) de dépôt et de refroidissement et au moins un poste de démoulage (4), et sachant qu'il est prévu un dispositif de transport (5) pour transporter les paires (7) de pièces rapportées entre les postes (2 à 4) comprenant au moins un poste d'injection (2), au moins un poste (3) de dépôt et de refroidissement et au moins un poste de démoulage (4), **caractérisée en ce que** le support (6) pour le moule d'injection est formé par une unité de fermeture (8) qui présente un plateau fixe (9) côté buse et un plateau mobile (10) côté fermeture, sur lesquels sont disposées une plaque porteuse (41) côté fermeture et une plaque (42) de distribution de canaux chauffants côté buse, entre lesquelles peut être insérée une paire (7) de pièces rapportées, et **en ce qu'**un support entraîneur (34) pour la paire (7) de pièces rapportées est prévu sur le plateau mobile (10) ou sur la plaque porteuse (41).

2. Machine selon la revendication 1, **caractérisée en ce que** le dispositif de transport est formé par un dispositif de manutention robotisé, en particulier avec un robot (13) à bras coudé, pour le transfert des paires (7) de pièces rapportées entre les postes individuels (2 à 4).

3. Machine selon la revendication 1 ou 2, **caractérisée en ce que** plusieurs postes (3) de dépôt et de refroidissement et au moins un poste de démoulage (4) ainsi que le poste d'injection sont disposés de préférence circulairement tout autour du dispositif de transport (13).

4. Machine selon l'une des revendications 1 à 3, **caractérisée en ce que** les postes (3) de dépôt et de refroidissement présentent chacun plusieurs étages de dépôt (36).

5. Machine l'une des revendications 1 à 4, **caractérisée en ce que** des moyens de refroidissement pour refroidir les paires (7) de pièces rapportées et la ou les pièces moulées qui se trouvent dans celles-ci sont associés aux postes (3) de dépôt et de refroidissement.

6. Machine selon la revendication 5, **caractérisée en ce que** les paires (7) de pièces rapportées présentent des canaux de refroidissement (15) pour un fluide de refroidissement, ainsi que des points de raccordement (16) pour des raccords (17) de fluide de refroidissement disposés de préférence aux postes (3) de dépôt et de refroidissement.

7. Machine selon l'une des revendications 1 à 6, **caractérisée en ce qu'**elle est réalisée sous forme de machine de co-injection et présente au moins un groupe d'injection (11a à 11d) pour l'injection de matière de peau et au moins un groupe d'injection (12) pour l'injection de matière de coeur.

8. Machine selon la revendication 7, **caractérisée en ce que** la machine d'injection présente plusieurs groupes d'injection (11a à 11d) pour l'injection de matière de peau.

9. Machine selon l'une des revendications 1 à 8, **caractérisée en ce que** le moule d'injection est réalisé sous forme de moule à trois plateaux, avec un plateau (9) côté buse qui est associé au demi-moule (7a) côté buse et qui présente notamment des alimentations pour la matière de peau et pour la matière de coeur conçues comme système de distribution de canaux chauds, et des groupes d'injection (11a à 11d, 12) pour injecter ces matières dans un distributeur de canaux froids (20) du demi-moule (7a) côté buse.

10. Machine selon l'une des revendications 1 à 9, **caractérisée en ce que** le demi-moule (7a) côté buse présente plusieurs points d'alimentation (18a à 18d) pour différentes matières de peau et un point d'alimentation (18) pour la matière de coeur.

11. Machine selon l'une des revendications 1 à 10, **caractérisée en ce que** les moyens de verrouillage (14) des paires (7) de pièces rapportées présentent des boulons de retenue (27) qui traversent leurs demi-moules et qui coopèrent de préférence côté buse avec des éléments de verrouillage amovibles réalisés de préférence sous la forme de barres de verrouillage (28).

12. Machine selon l'une des revendications 1 à 11, **caractérisée en ce que** le poste de démoulage (4) présente des moyens pour déverrouiller et verrouiller les éléments de verrouillage (28) et pour ouvrir et fermer les paires (7) de pièces rapportées, ainsi que des moyens (23) pour retirer la carotte (22).

13. Machine selon l'une des revendications 1 à 12, **caractérisée en ce que** le support entraîneur (34), agissant sur le demi-moule (7b) côté fermeture et relié au plateau mobile (10) côté fermeture de l'unité de fermeture (8) ou à une plaque porteuse (41), et un support (35), agissant sur le demi-moule (7a) côté buse et relié au plateau (9) côté buse ou analogue de l'unité de fermeture (8), peuvent être respectivement déplacés en position de retenue et en position de libération.

14. Machine selon l'une des revendications 1 à 13, **caractérisée en ce qu'**il est prévu une commande pour le dispositif de transport (13) formé de préférence par un dispositif de manutention robotisé, commande qui présente une mémoire pour les positions de dépôt des paires (7) de pièces rapportées ainsi que pour les paramètres d'injection et les paramètres de refroidissement qui leur sont associés.
